# EUROPEAN PATENT APPLICATION

(11) **EP 0 659 835 A2**
(43) Date of publication of application: **28.06.1995**
(21) Application number: 94309460.7
(22) Date of filing: 16.12.1994
(51) Int. Cl.: C08L 69/00, C08L 55/02, C08L 25/12, C08L 101/10

(54) **Low-gloss polycarbonate/ABS resin compositions**

(30) Priority: 21.12.1993 JP 346695/93
(71) Applicant: GENERAL ELECTRIC COMPANY, Schenectady, NY 12345 (US)
(72) Inventor: Liu, Chang Feng, Delmar, New York 12054 (US); Itoi, Hideyuki, Utsunomiya City, Tochigi Pref. (JP); Miyake, Hiroshi, Haga-gun, Tochigi Pref. (JP)
(74) Representative: Szary, Anne Catherine

(57) **Abstract**

A low-gloss polycarbonate/ABS resin composition having good impact resistance, weather resistance, and lightfastness comprises (A) from 1-90 parts by weight of a polycarbonate resin, (B) from 90-1 parts by weight of ABS resin, and (C) from 90-1 parts by weight of SAN and (D) 1-50 parts per 100 parts of the total weight of (A), (B) and (C) of a polyolefin compound whose functionality is sensitized by silane.

## Description

### Industrial application field

This invention is concerned with a resin composition made by blending a polycarbonate resin with an acrylonitrile-butadiene-styrene resin (hereinafter referred to as ABS), and is especially concerned with a low-gloss polycarbonate/ABS resin composition suitable for low-gloss products.

### Conventional techniques

Polycarbonate resins had high mechanical strength and have been known as highly functional resins, e.g., engineering plastics. These resins have also been known to be suitable for blending with various types of resins because of their properties.

The following procedures, e.g., blending polycarbonates with an ABS resin (Japanese Kokoku Patent Nos. Sho 38[1963]-15225, Sho 51[1976]-11142); blending with polystyrene (Japanese Kokoku Patent Nos. Sho 43[1968]-6295, Sho 44[1969]-11551), have been known to improve the processability of an aromatic polycarbonate resin. Blending with either an ABS resin or polystyrene is suitable for improving the processability of a polycarbonate resin without damaging the mechanical strength.

However, the resulting products created by these blendings are glossy. Though glossy products are preferred for some applications, on the other hand, either mat or low-gloss products are desirable for the following applications, e.g., computer terminals (devices), OA devices, housings for various electric or electronic products, and various parts for cars.

Embossing has sometimes been used to create products with low-gloss surfaces. However, the cost is high and the mat or low-gloss surface is damaged by abrasion.

Also, there is an adverse influence on the physical properties such as impact strength when adding a mat agent such as fine-powder silica, silicate, alumina, or other mineral fillers. Attempts have been made to use a polymer as the added mat agent, resulting in an adverse influence on the following properties, e.g., impact strength, heat-distortion temperature, weather resistance, lightfastness, and other important properties.

The following technique, i.e., blending an aromatic polycarbonate resin composition such as a glycidyl methacrylate copolymer that has low gloss and good mechanical properties, is the subject of a patent application (Japanese Kokai Patent Application Nos. Hei 2[1990]-227449, Hei 3[1991]-199255). However, products made of this resin composition exhibited high gloss, which was unsatisfactory for some applications.

### Problems to be solved by the invention

The purpose of this invention is to provide a polycarbonate/ABS resin composition which has high impact resistance, high weather resistance, and high lightfastness, and which has low gloss.

### Means to solve the problems

The problems in this invention can be solved by using a low-gloss polycarbonate/ABS resin composition made by adding 1-50 parts by weight of: D) a polyolefin compound whose functionality is sensitized by silane, to 100 parts of weight (total) of: A) 1-90 parts by weight of a polycarbonate resin, B) 90-1 parts by weight of an ABS resin, and C) 90-1 parts by weight of SAN.

Any type of polycarbonate resin can be used for this invention. However, polycarbonates made by melting both an aromatic dihydric compound and a carbonic acid diester, and containing both a phenolic end group (I) and a nonphenolic end group (II) (equivalent ratio of (I):(II) equal to 1:19 or more), are preferable.

The phenolic end group (I) is described by the following formula: 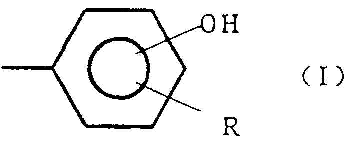
and the nonphenolic end group (II) is described by the following formula:

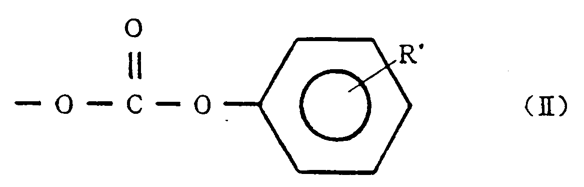

The ratio of the two end groups can be easily adjusted by adjusting the molar ratio of the aromatic dihydric compound to that of the carbonic acid diester, i.e., the raw materials, when the polycarbonate is made using a melt method (an ester-exchange method). In using both bisphenol A as the aromatic dihydric compound and diphenyl carbonate as the carbonic acid diester, either a phenolic residue originating from the bisphenol A or a phenyl group originating from the diphenyl carbonate is identified as the end [group] of the product polycarbonate.

If the molar ratio of bisphenol A is increased when the ester-exchange reaction is carried out, the ratio of phenolic residue end groups in the product polycarbonate is increased. The ratio of end groups of polycarbonate used for this invention is preferably: (I)/(II) equal to 1:10 or more, especially 1:5 to 1:10.

The polycarbonate used for this invention may be branched. Examples of such branched polycarbonates include the following, e.g., thermoplastics and randomly branched polycarbonates made by carrying out the reaction of a polyfunctional and aromatic compound with diphenol and/or a carbonate precursor.

The polyfunctional polyolefin used for this invention is described by the following formula, e.g., 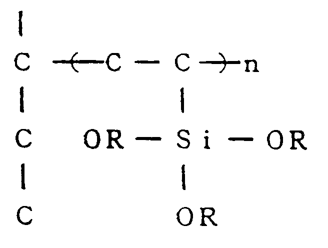
and the functionality of the polyolefin is sensitized by silane (Si). Examples of commercial polyolefins include the following, e.g., functional polypropylene Linklon800; functional and high-density polyethylene LinklonHF700 (both examples are made by Mitsubishi Petrochemical Co., Ltd.)

The following additives, e.g., reinforcing agents, fillers, weather-resistant agents, other stabilizers; pigments, antioxidants, plasticizers, can be used with the polycarbonate/ABS resin composition of this invention, if the purpose of this invention can still be achieved.

### Operation

Low gloss in the polycarbonate/ABS resin composition of this invention can be achieved by adding a commercial polyfunctional polyolefin such as a polypropylene grafted with a silane. The polyfunctional polyolefin can be directly added to the polycarbonate/ABS while melting and kneading, without first mixing it with either the polycarbonate or ABS or SAN.

The resin composition can be melted and kneaded using conventional equipment for melting and kneading a polycarbonate/ABS.

### Application examples

In the following, the details of this invention are explained with application examples. Examples of the thermoplastic resins used for this invention include the following; however, this invention is not specifically restricted by the examples.

For the application examples, as the polycarbonate (PC), Lexan141 (brand, made by General Electric) was used as the polycarbonate PC (1) having less than 1% phenol end groups, and LXPC (brand, made by Nippon GE Plastics) was used as the PC (2) with the low end blocked, which was made by melt polymerization and which contained about 60% phenol end groups.

UXO50 (brand, made by Ube Cycon, Ltd.) was used as the ABS resin. SB30B (brand, made by Ube Cycon, Ltd.) was used as the SAN.

LinklonXPM800 (brand, made by Mitsubishi Petrochemical Co., Ltd.) was used as the PP-f (functional polypropylene).

A twin-screw extruder (35 mm, made by Toshiba Co., Ltd.) was used to make pellets of the above-mentioned ingredients a screw rate of 150 rpm and a barrel temperature of 260°C.

Test samples for both elongation tests and Izod tests were individually made from the product pellets using a 80-t Ti-G80 injection molding apparatus (brand, made by Toyo Kinzoku Koeki Co., Ltd.) at a 250°C barrel temperature and a 50°C molding temperature.

The surface gloss of each product test sample was measured using a glossmeter at a 60° incident angle and a 60° reflection angle relative to the normal. The measurement was based on ASTM D-523-62T.

The following tests, e.g., notched Izod impact test (NII), flexural modulus (FM), heat-distortion temperature (HDT); melt index (MI), were performed. The tests were based on ASTM.

**Table I**

| Application example | 1 | 2 | 3 | 4 |
|---|---|---|---|---|
| Component (parts by weight) | | | | |
| PC | 60 | 60 | 60 | 60 |
| ABS | 16 | 16 | 16 | 16 |
| SAN | 24 | 21 | 18 | 15 |
| PP-f | | 3 | 6 | 9 |

| Evaluation result | | | | |
|---|---|---|---|---|
| Gloss (60°) | 106 | 51 | 37 | 25 |
| NII,1/8, kgcm/cm | 61 | 59 | 40 | 25 |
| FM,1/8, Kkg/cm² | 25 | 25 | 24 | 23 |
| HDT,1/8, 18.6kg | 123 | 124 | 123 | 123 |
| MI, 5kg, 260°C | 14.8 | 14.6 | 14.1 | 13.5 |

Both the component ratios and the characteristic data used for the application examples of this invention are shown in Tables I, II, III, and IV. The surface gloss of the products was reduced by about 50% when 3% functional polyolefin was added to the polycarbonate/ABS (standard composition combination). However, the following, e.g., impact resistance, elasticity, HDT, and MI were not changed.

**Table II**

| Application example | 5 | 6 |
|---|---|---|
| Component (parts by weight) | | |
| PC (1) | 60 | 60 |
| ABS | 16 | 16 |
| SAN | 24 | 21 |
| PP-f | | 3 |

| Evaluation result | | |
|---|---|---|
| Gloss (60°) | 105 | 47 |
| NII,1/8, kgcm/cm | 65 | 63 |
| FM,1/8,Kkg/cm² | 25 | 24 |
| HDT,1/8, 18.6kg | 123 | 123 |
| MI, 5kg, 260°C | 15 | 14 |

The test results are shown in Tables I, I, III, and IV. It was verified that this invention was effective with both the polycarbonate PC (1), made by a conventional phosgene method, and PC (2) with the low end blocked, made by a melt polymerization.

**Table III**

| Application example | 7 | 8 | 9 | 10 |
|---|---|---|---|---|
| Component (parts by weight) | | | | |
| PC (2) | 60 | 60 | 60 | 60 |
| ABS | 16 | 16 | 16 | 16 |
| SAN | 24 | 21 | 18 | 15 |
| PP-f | | 3 | 6 | 9 |

| Evaluation result | | | | |
|---|---|---|---|---|
| Gloss (60°) | 105 | 45 | 26 | 17 |
| NII,1/8, kgcm/cm | 61 | 57 | 46 | 40 |
| FM, 1/8,Kkg/cm² | 25 | 25 | 24 | 24 |
| HDT,1/8, 18.6kg | 123 | 122 | 121 | 121 |
| MI, 5kg, 260°C | 15 | 15 | 14 | 14 |

**Table IV**

| Application example | 11 | 12 | 13 | 14 |
|---|---|---|---|---|
| Component (parts by weight) | | | | |
| PC (1) | 60 | 60 | 60 | 60 |
| ABS | 16 | 16 | 16 | 16 |
| SAN | 24 | 21 | 18 | 15 |
| PP-f | | 3 | 6 | 9 |

| Evaluation result | | | | |
|---|---|---|---|---|
| Gloss (60°) | 105 | 44 | 28 | 19 |
| NII,1/8, kgcm/cm | 61 | 57 | 48 | 42 |
| FM, 1/8, Kkg/cm₂ | 25 | 25 | 25 | 24 |
| HDT,1/8, 18.6kg | 123 | 123 | 121 | 122 |
| MI, 5kg, 260°C | 15 | 15 | 14 | 14 |

### Effects

The surface gloss of the product made of a low-gloss polycarbonate/ABS resin composition of this invention is reduced by about 50% compared to that of a conventional product. The following (properties), e.g., impact resistance, elasticity, HDT, MI, are equal to those of a conventional product.

Products made of the low-gloss polycarbonate/ABS resin composition of this invention have low gloss and good properties and can be used for various applications.

## Claims

1. A low-gloss polycarbonate/ABS resin composition comprising (A) 1-90 parts by weight of a polycarbonate resin, (B) 90-1 parts by weight of an ABS resin, (C) 90-1 parts by weight of SAN and (D) 1-50 parts by weight per 100 parts of the total weight of (A), (B) and (C) of a polyolefin compound whose functionality is stimulated by silane.

2. The low-gloss polycarbonate/ABS resin composition according to Claim 1, wherein the polyolefin compound is selected from : polypropylene (PP), high-density polyethylene (HDPE), low-density polyethylene (LDPE), and linear low-density polyethylene (LLDPE).

3. The low-gloss polycarbonate/ABS resin composition according to Claim 1, wherein the polyolefin compound is selected from : ethylene vinyl acetate and styrene-ethylene-butadiene-styrene (SEBS).
